# EUROPEAN PATENT SPECIFICATION

(11) **EP 3 160 052 B1**
(45) Date of publication and mention of the grant of the patent: **08.04.2020**
(21) Application number: 15810052.9
(22) Date of filing: 08.06.2015
(51) Int. Cl.: H04B 3/04, B60M 1/00

(54) **ELECTRIC RAILWAY COAXIAL CABLE POWER SUPPLY SYSTEM**
STROMVERSORGUNGSSYSTEM ÜBER KOAXIALKABEL FÜR ELEKTRISCHE EISENBAHN
SYSTÈME D'ALIMENTATION ÉLECTRIQUE PAR CÂBLE COAXIAL DE CHEMIN DE FER ÉLECTRIQUE

(30) Priority: 17.06.2014 CN 201410271250
(43) Date of publication of application: 26.04.2017
(73) Proprietor: Southwest Jiaotong University, Chengd, Sichuan 610041 (CN); LI, Qunzhan, Sichuan 610031 (CN)
(72) Inventor: LI, Qunzhan, Chengdu Sichuan 610031 (CN)
(74) Representative: Slingsby Partners LLP
(86) International application number: PCT/CN2015/000393
(87) International publication number: WO 2015/192645

(56) References cited:
- CN-A- 102 353 876
- CN-A- 102 353 876
- CN-A- 103 493 335
- CN-A- 104 057 842
- CN-U- 2 097 481
- CN-U- 2 097 481
- CN-U- 203 920 466
- CN-Y- 201 309 433
- GB-A- 2 331 856
- JP-A- S 619 350
- JP-A- 2014 050 222
- SU-A1- 1 643 227
- SU-A1- 1 643 227
- US-A1- 2012 126 622

## Description

### TECHNICAL FIELD

The present invention relates to a coaxial cable power supply system for electrified railway, specifically to the fields of industrial-frequency single-phase AC traction power supply for trunk railway and urban rail transit.

### BACKGROUND

Single-phase system has the advantages of simple structure, low construction cost, convenient for use and maintenance, etc. Therefore, the industrial-frequency single-phase AC power supplied by the utility grid is often adopted for train (traction load) power supply in electrified railway. In order to make single-phase traction load distributed as evenly as possible in the three-phase utility grid, phase rotation and phase partitioning schemes are applied in electrified railway. The adjacent power supply sections in the phase partition section are separated by the neutral section insulator which is called electric phase-split, or phase-split. However, the phase-split is an obstruction to the performance of electrified railway for creating a breakpoint of power supply. Electric locomotives may fail to be supplied with power sustainably because of the existence of breakpoints. What's more, the phase-split is also a mechanical weakness which may degrade the system reliability.

The phase-splits are generally set up at the connection point of two feeding sections at the exit of substation and at the section post between two adjacent substations, in other words, every substation generally has two phase-splits in each substation's jurisdiction in average. With the continuous increase of train speed, engine driver is not able to pass the neutral section of phase-split by downshifting the gears, shutting off the auxiliary units, turning off the main circuit breakers, running through by inertia, turning on the main circuit breakers, switching on the auxiliary units and upshifting the gears in manually so as to recover the traction power, in such a case, in order to avoid the voltaic arc caused by the train passing through neutral section with electricity, which could lead to the damages of catenary suspension components or even phase to phase short circuit, etc., the technologies of automatic passing through the neutral section were developed. The main approaches of automatic passing through the neutral section are the ground switch auto-switching phase-split, the on-board auto-passing phase-split, the on-column auto-switching phase-split and so on. However, there is still an electrical transient process of train when the train is passing through the neutral section during the phase switching, which may result in over voltage or current and may cause further damages of traction network and on-board equipments, and even may lead to failing to pass through the neutral section automatically. All of these would affect the reliability of power supply and the safety operation of train. Therefore, the phase-split is still the weakest point in traction power supply system and is the bottleneck in the development of high-speed railway and even is the bottleneck of traction power supply for the entire electrified railway.

Obviously, the fundamental approach of avoiding harmful effects mentioned above is to eliminate the phase-splits. The researches have shown that the phase-splits at the exit of traction substations can be eliminated by using co-phase power supply technology, while the use of new bilateral power supply technology can eliminate the phase-splits at the section posts. It has been suggested that the negative sequence current must be managed when the co-phase power supply technology is implemented in the traction substations so as to meet the requirements of national standard. Additionally, the key of adopting the bilateral power supply at the section posts is reducing the equilibrium current caused by the bilateral power supply. But there is no standard to be followed about the equilibrium current. It still requires further study on whether bilateral power supply technology could be implemented. It has been found that, for a railway line with the given length, it is an effective way of avoiding or reducing occurrences of the phase-splits if the feeding section can be extended maximally. For example, the length is increased from a few tens kilometers currently to 200 kilometers and beyond. In other words, the phase-split at the exit of traction substation could be avoided by using co-phase power supply technology, and if the length of feeding sections of both sides is larger than that of the railway line, there is no need for another phase-split along the railway line, and if the length of feeding sections of both sides is smaller than that of the railway line, one phase-split should be set along the railway line. If a provincial power grid does not allow the power supply to cross provincial boundary, a phase-split is needed at the boundary point.

Maximizing the length of the feeding section could also help realizing railway electrification for areas of lacking electricity or no electricity such as Qinghai-Tibet Plateau.

The present invention provides a coaxial cable power supply system for electrified railway, aiming to maximize the length of the feeding section so as to reduce or avoid phase-splits and ultimately to enable train to pass more smoothly.

With the development of materials and manufacturing techniques, coaxial cable costs are dropping significantly, which lays an economic foundation for the implementation of this patent.
Document GB2331856 A discloses an electricity supply system. An electrical supply system, suitable for traction arrangements, comprises an inductive device with a winding which includes two semi-conducting layers, each providing an equipotential surface, with the said layers being separated by a solid insulating layer. One layer may be at the same potential as the central conductors whilst the other layer may be connected to earth. The inductive device may be an auto-transformer, a current booster transformer or a rotating converter. The inductive device may be connected to a high voltage three phase distribution line via high voltage switchgear and a transformer. The inductive device may provide a single phase lower voltage traction supply system. One or more transformers may be connected between the output of the inductive device and/or the traction supply line and an intermediate voltage supply line.
Document JP 2014050222A discloses a connection device for a feeding coaxial cable. A connection device for a feeding coaxial cable is an insulation unit having a configuration in which a first embedded electrode, a second embedded electrode and an insulation part formed of hard insulation material are integrally formed and a shield layer is formed on the surface of the insulation part. Further, in a hermetically sealed space inside the insulation unit, an inner conductor of the feeding coaxial cable and a cable conductor of a first single power core cable are electrically connected via the first embedded electrode, and an outer conductor of the feeding coaxial cable and a cable conductor of a second single core power cable are electrically connected via the second embedded electrode.

### SUMMARY

An objective of the present invention is to provide a coaxial cable power supply system for electrified railway, which is mainly used for the fields of industrial-frequency single-phase AC power for trunk railway and urban rail transit. It can maximize the length of the feeding section, thus avoiding or reducing the phase-splits so as to enable train to pass more smoothly.

In order to achieve the above object, an embodiment of the invention discloses a coaxial cable power supply system for electrified railway consisting of main traction substations, coaxial cables, traction transformers, catenary, rails and circuit breakers, etc., wherein the coaxial cable consists of an inner conductor, an inner insulator, an outer conductor and an outer insulator, etc., and the connection scheme of traction transformer is single-phase wiring, the main traction substation is connected to coaxial cable which is erected in parallel with the catenary, the primary side of the traction transformer is connected in parallel between the inner conductor and the outer conductor of the coaxial cable, while the secondary side of the traction transformer is connected in parallel between the catenary and the rail, wherein terminal of the traction transformer connected to the inner conductor of the coaxial cable and terminal of the traction transformer connected to the catenary are dotted terminals, the traction transformers are distributed along the coaxial cables and the catenary with a proper distance, the two adjacent traction transformers connect the inner conductor of the coaxial cable to the catenary in parallel and connect the outer conductor of the coaxial cable to the rail in parallel, the electric locomotives are supplied with power between the catenary and the rail.

The part beyond the main traction substation (SS) is owned by the utility grid for management, while the main traction substation (SS) itself and the coaxial cable power supply system are managed by railway system.

The working principles of the present invention are shown as follows: The power of electrical locomotives between the catenary and the rail is mainly supplied by the nearest traction transformer; the power of traction transformer is supplied through the coaxial cable; the coaxial cable gains power from the main traction substation which is connected to the utility grid. Therefore, the voltage level of the coaxial cable should be higher than that of the catenary with the advantages of providing larger power supply capability and longer power supply distance.

Compared with the prior art, the beneficial effects of the present invention are:

The power supply capability and the voltage level are decided mainly by the coaxial cable. Therefore, it is appropriate for variable matching mode of voltage level of the coaxial cable and the catenary. For instance, 110 kV coaxial cable can be chosen for 27.5 kV catenary of an electrified railway line, while 35 kV coaxial cable be chosen for 1.1-3.5 kV catenary of a metro or a light rail or other urban rail transits.

The coaxial cable plays a major role in power supply, while each segment of the catenary is responsible for supplying power for locomotives within its own segment. In this way, the average current-carrying capacity of catenary is greatly reduced and thus catenary wire with smaller diameter can be chosen, which leads to lightweight suspension and overall quality improvements of catenary. Moreover, the use of the coaxial cable can effectively decrease rail potential, and reduce external electromagnetic interference.

Unlike the overhead line which requires additional corridor occupancy, the coaxial cable in this invention can be set up along the railway or metro tunnel easily. The additional advantage over the overhead line is that the coaxial cable has larger capability and is able to provide longer distance of power supply. The use of coaxial cable can also reduce the interfaces between railway and utility grid, save the external power supply investment and thus the system is easy to be managed.

The system presented in this invention is reliable and is easy to be implemented.

In conjunction with the accompanying figures and specific embodiments of the present invention, more details are given below.

### BRIEF DESCRIPTION OF DRAWING

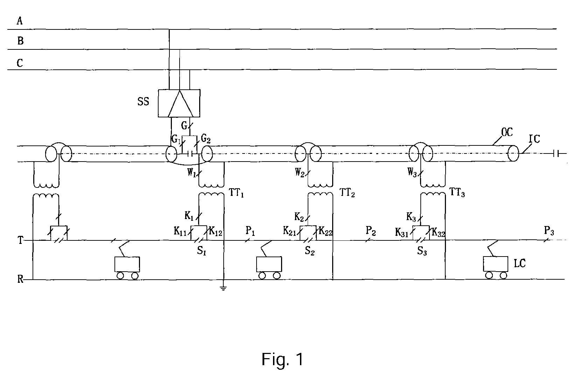

Fig.1 is a schematic diagram of the embodiment of the invention.

### DESCRIPTION OF EMBODIMENTS

### Example

Figure 1 has shown a schematic view of an implementation for this invention: A coaxial cable power supply system for electrified railway consists of a main traction substation *SS,* a coaxial cable, traction transformers *TT,* catenary *T*, rail *R,* circuit breakers and other components. Among them, the coaxial cable consists of an inner conductor (*IC*), an inner insulator, an outer conductor (*OC*) and an outer insulator, and the connection scheme of the traction transformer is single-phase wiring. The main traction substation *SS* is connected to the circuit breaker *G* which is connected to the coaxial cable terminal of the left feeding section through the circuit breaker *G1* and is connected to the coaxial cable terminal of the right feeding section through the circuit breaker *G2.* The coaxial cable and the catenary are erected in parallel. The primary side of the traction transformer *TTᵢ* is connected in parallel between the inner conductor *IC* and the outer conductor *OC* of the coaxial cable, wherein the circuit breaker *Wᵢ* is set up, while the secondary side of the traction transformer *TTᵢ* is connected in parallel between the catenary *T* and the rail *R,* where terminal of the traction transformer connected to the inner conductor *IC* of the coaxial cable and terminal of the traction transformer connected to the catenary *T* are dotted terminals, denoted as *. In order to facilitate the traction transformers *TTᵢ* and the catenary *T* faultsisolating and repairing , an electrical segment *Sᵢ,* a circuit breaker *Kᵢ,* a left circuit breaker *Kᵢ₁* and a right circuit breaker *Kᵢ₂* are set up, wherein the *Kᵢ₁* and the *Kᵢ₂* are connected over the electrical segment *Sᵢ* so that the locomotive can pass through the electric segment *Sᵢ* without losing power supply. The traction transformers *TTᵢ* are distributed along the coaxial cable and the catenary *T* with a proper distance. The two adjacent traction transformers connect the inner conductor of the coaxial cable to the catenary in parallel and connect the outer conductor of the coaxial cable to the rail in parallel. The power for electric locomotive *LC* is supplied between the catenary *T* and the rail *R*. The distance between two adjacent traction transformers in an electrified railway line is generally more than 20 kilometers, a section post *Pᵢ* can be set up to draw a smaller partition for easier faults isolating and repairing when the distance is larger, wherein *i*=*1, 2,..., n* and n is the number of traction transformers along one feeding section.

The part beyond the main traction substation *SS* is owned by the utility grid for management, while the main traction substation *SS* itself and the coaxial cable power supply system are managed by railway system.

The working principles of the invention are shown as follows: The power of electrical locomotive *LC* between catenary *T* and rail *R* is supplied mainly by the nearest traction transformer whose power is supplied through coaxial cable, which in turn gains power from the central traction substation which is connected to the utility grid *ABC.*

For an electrified railway line, 220 kV utility grid can be selected as an external power source to the input *ABC* of the main traction substation *SS,* and 110 kV coaxial cable matches with 27.5 kV catenary. For metro, light rail or other type of urban rail transit, 110 kV or 220 kV utility grid can be selected as an external power source to the input *ABC* of the main traction substation *SS,* and 35 kV coaxial cable can be chosen for 1.1-3.5 kV catenary. In order to enhance the reliability of power supply, a coaxial cable can be set up in a 100% standby mode. Another approach is that two coaxial cables work in parallel and one of the coaxial cables will be out of service completely or partially only during maintenance or a faulty.

## Claims

1. A coaxial cable power supply system for supplying power to electric locomotives (LC) of an electrified railway comprising main traction substations (SS), coaxial cables, traction transformers (TT), catenary (T), rails (R) and circuit breakers (G, K, W), wherein the electric locomotives (LC) are supplied with power between the catenary (T) and the rail (R);
the coaxial cable comprising an inner conductor (IC), an inner insulator, an outer conductor (OC) and an outer insulator, and the connection scheme of the traction transformer is single-phase wiring, wherein: the main traction substation (SS) is connected to the coaxial cable which is parallel to the catenary (T); the primary side of the traction transformer (TTi) is connected in parallel between the inner conductor (IC) and the outer conductor (OC) of the coaxial cable, while the secondary side of the traction transformer (TTi) is connected in parallel between the catenary (T) and the rail (R), wherein terminal of the traction transformer (TTᵢ) connected to the inner conductor (IC) of the coaxial cable and terminal of the traction transformer (TTi) connected to the catenary are dotted terminals; the traction transformers (TT) are distributed along the coaxial cables and the catenary (T) with a proper distance.

2. The coaxial cable power supply system of Claim 1, **characterized in that**: the voltage level of the coaxial cables is higher than that of the catenary (T).

3. The coaxial cable power supply system of Claim 1, **characterized in that**: an electrical segment (Sᵢ), a circuit breaker (Kᵢ), a left circuit breaker (Kᵢ₁) and a right circuit breaker (Kᵢ₂) are set up at catenary (T), wherein the (Kᵢ₁) and the (Kᵢ₂) are connected over the electrical segment (Sᵢ).

4. The coaxial cable power supply system of Claim 1, **characterized in that**: the distance between two adjacent traction transformers (TTᵢ) is generally more than 20 kilometers, a section post can be set up to draw a smaller partition for easier faults isolating and repairing when the distance is larger than 20 kilometers, wherein *i*=1, 2,..., n and n is the number of traction transformers along one feeding section.

## Patentansprüche

1. Koaxialkabel-Spannungsversorgungssystem zum Bereitstellen von elektrischer Leistung für elektrische Lokomotiven (LC) einer elektrifizierten Bahnstrecke, umfassend Haupttraktions-Umspannstationen (SS), Koaxialkabel, Traktionstransformatoren (TT), Oberleitungen (T), Schienen (R) und Leistungsschalter (G, K, W), wobei elektrische Lokomotiven (LC) zwischen Oberleitung (T) und Schiene (R) mit elektrischer Leistung versorgt werden;
wobei das Koaxialkabel Innenleiter (IC), Innenisolator, Außenleiter (OC) und Außenisolator umfasst und das Verbindungsschema des Traktionstransformators eine einphasige Verdrahtung ist, wobei: die Haupttraktions-Umspannstation (SS) mit dem Koaxialkabel verbunden ist, das parallel zu der Oberleitung (T) verläuft; die Primärseite des Traktionstransformators (TTi) zwischen dem Innenleiter (IC) und dem Außenleiter (OC) des Koaxialkabels parallel geschaltet ist, während die Sekundärseite des Traktionstransformators (TTi) zwischen Oberleitung (T) und Schiene (R) parallel geschaltet ist, wobei der Anschluss des Traktionstransformators (TTi), verbunden mit dem Innenleiter (IC) des Koaxialkabels, und der Anschluss des Traktionstransformators (TTi), verbunden mit der Oberleitung, Punktanschlüsse sind; Traktionstransformatoren (TT) sind entlang den Koaxialkabeln und der Oberleitung (T) in einem angemessenen Abstand verteilt.

2. Koaxialkabel-Spannungsversorgungssystem nach Anspruch 1, **dadurch gekennzeichnet, dass**: der Spannungspegel der Koaxialkabel höher als der der Oberleitung (T) ist.

3. Koaxialkabel-Spannungsversorgungssystem nach Anspruch 1, **dadurch gekennzeichnet, dass**: Elektrisches Segment (Sᵢ), Leistungsschalter (Kᵢ), linker Leistungsschalter (Kᵢ₁) und rechter Leistungsschalter (Kᵢ₂) an Oberleitung (T) eingerichtet sind, wobei (Kᵢ₁) und (Kᵢ₂) über das elektrische Segment (Sᵢ) verbunden sind.

4. Koaxialkabel-Spannungsversorgungssystem nach Anspruch 1, **dadurch gekennzeichnet, dass**: Der Abstand zwischen zwei benachbarten Traktionstransformatoren (TTᵢ) im Allgemeinen mehr als 20 Kilometer beträgt, wobei ein Teilstückpfosten zum leichteren Isolieren von Störungen und zum Reparieren eingerichtet werden kann, sodass dieser einen geringeren Abschnitt abdeckt, wenn der Abstand größer als 20 Kilometer ist, wobei *i* = 1, 2, ..., n und n die Anzahl der Traktionstransformatoren entlang eines Versorgungsabschnitts ist.

## Revendications

1. Système d'alimentation en énergie par câble coaxial pour l'alimentation en électricité de locomotives électriques (LC) d'un chemin de fer électrifié comprenant des sous-stations de traction principales (SS), des câbles coaxiaux, des transformateurs de traction (TT), une caténaire (T), des rails (R) et des disjoncteurs (G, K, W), dans lequel les locomotives électriques (LC) sont alimentées avec de l'électricité entre la caténaire (T) et le rail (R) ;
le câble coaxial comprenant un conducteur interne (IC), un isolant interne, un conducteur externe (OC) et un isolant externe, et le schéma de connexion du transformateur de traction est un câblage monophasé, dans lequel : la sous-station de traction principale (SS) est connectée au câble coaxial qui est parallèle à la caténaire (T) ; le côté principal du transformateur de traction (TTi) est connecté en parallèle entre le conducteur interne (IC) et le conducteur externe (OC) du câble coaxial, tandis que le côté secondaire du transformateur de traction (TTi) est connecté en parallèle entre la caténaire (T) et le rail (R), dans lequel la borne du transformateur de traction (TTi) connectée au conducteur interne (IC) du câble coaxial et la borne du transformateur de traction (TTi) connectée à la caténaire sont des bornes en pointillés ; les transformateurs de traction (TT) sont répartis le long des câbles coaxiaux et de la caténaire (T) à une distance appropriée.

2. Système d'alimentation en énergie par câble coaxial selon la revendication 1, **caractérisé en ce que** : le niveau de tension des câbles coaxiaux est supérieur à celui du caténaire (T).

3. Système d'alimentation en énergie par câble coaxial selon la revendication 1, **caractérisé en ce que** : un segment électrique (Sᵢ), un disjoncteur (Kᵢ), un disjoncteur gauche (Kᵢ₁) et un disjoncteur droit (Kᵢ₂) sont configurés sur la caténaire (T), dans lequel le (Kᵢ₁) et le (Kᵢ₂) sont connectés sur le segment électrique (Sᵢ).

4. Système d'alimentation en énergie par câble coaxial selon la revendication 1, **caractérisé en ce que** : la distance entre deux transformateurs de traction adjacents (TTᵢ) est généralement de plus de 20 kilomètres, un poteau de section peut être configuré pour dessiner une partition plus petite pour faciliter l'isolation et la réparation lorsque la distance est supérieure à 20 kilomètres, dans lequel *i*=1, 2,..., n et n est le nombre de transformateurs de traction le long d'une section d'alimentation.
